# EUROPEAN PATENT SPECIFICATION

(11) **EP 2 434 160 B1**
(45) Date of publication and mention of the grant of the patent: **01.07.2020**
(21) Application number: 10777808.6
(22) Date of filing: 20.05.2010
(51) Int. Cl.: F04D 13/06, F04D 29/047, F04D 29/58, H02K 1/02, H02K 1/27, H02K 1/28, H02K 7/14

(54) **PUMP**
PUMPE
POMPE

(30) Priority: 20.05.2009 JP 2009122398
(43) Date of publication of application: 28.03.2012
(73) Proprietor: Panasonic Corporation, Osaka 571-8501 (JP)
(72) Inventor: TOKUNAGA, Ryohei, Osaka 540-6207 (JP); HIRATA, Masahiro, Osaka 540-6207 (JP)
(74) Representative: Appelt, Christian W.
(86) International application number: PCT/JP2010/058548
(87) International publication number: WO 2010/134576

(56) References cited:
- WO-A2-2006/062943
- JP-A- S5 797 354
- JP-A- 2007 032 370
- US-A1- 2004 037 719
- US-A1- 2007 243 086
- US-A1- 2008 278 018

## Description

### TECHNICAL FIELD

This invention relates to pumps which comprise motors. Particularly, this invention relates to a pump which comprises a motor having a rotor made of anisotropic bond magnet.

### BACKGROUND ART

Japanese patent application publication No. 2006-200427A and Japanese patent application publication No. 2008-172965A disclose prior pumps. The prior DC brushless pump comprises a stator, a rotor, an impeller, and a casing. The casing has an inlet, an outlet, and a pump chamber which communicates the inlet with the outlet. The pump chamber houses a rotor and an impeller. The rotor has an axial direction. The rotor is formed to have a tubular shape, whereby the rotor has an opening extending in the axial direction of the rotor. The rotor is made of permanent magnet. The impeller is attached to one axial end of the rotor. Therefore, when the rotor is made rotation, the impeller is rotated according to the rotation of the rotor. The stator has a coil. The coil is configured to generate the magnetic field when the electrical current is supplied to the coil. The magnetic field causes the rotation of the permanent magnet. In the above mentioned pump, when the coil receives the electrical current, the coil generates the magnetic field. The magnetic field provides a rotation of the rotor. When the rotor is made rotation, the impeller is also made rotation. According to the rotation of the impeller, the liquid is forced to be sent to the outside of the impeller from the center of the impeller. Consequently, the liquid is send to the outside of the pump from the pump chamber through the outlet. When the liquid is sent to the outside of the pump from the pump chamber, the pressure of an inside of the pump chamber is decreased. When the pressure in the pump chamber is decreased, the liquid in the outside of the pump is flown into the pump chamber through the inlet. In this manner, the pump transfers the liquid.

The prior pump has a problem that the foreign substance and the air are remained between a rotor and an inside wall of the pump chamber. In addition, the prior pump also has a problem that the heat is retained between the rotor and the inside wall of the pump chamber. In order to solve this problem, the impeller is provided with a through hole which extends in the axial direction of the impeller. According to the through hole, the foreign substance and the air between the rotor and the inside wall of the pump chamber are circulated. Consequently, the foreign substance and the air between the rotor and the pump room are discharged.

The permanent magnet used as the rotor of the DC brushless motor is required to have a high accuracy of dimension. In addition, there is a requirement to reduce the number of processes for manufacturing the motor and to save the cost of the motor. In view of the requirement, the permanent magnet is made of bond magnet which has a anisotropy. The bond magnet is made of a magnet realized by a mixture of the resin and the magnet powder.
Furthermore, US 2008/0278018 A1 and JP 57-97354 A disclose electric motor assemblies, not, however, providing a permanent magnet being made of a bond magnet.

### DISCLOSURE OF THE INVENTION

### PROBLEM TO BE SOLVED BY THE INVENTION

The bond magnet having the anisotropy is manufactured by the injection molding of injecting "the compound of the resin and the powder of the permanent magnet" into "an inside of the mold with magnets for magnetic field orientation" through the gate of the mold. When the bond magnet is manufactured by means of the injection molding, as will be understood from the patent literature **2**, the bond magnet is formed with a weld line. In addition, when the magnetic poles of the bond magnet are formed by means of the magnetic field orientation, the boundaries are formed between a certain magnetic pole and a magnetic pole next to the certain magnetic pole. The weld line and the boundary have low mechanical strength.

When the impeller, the permanent magnet (anisotropic bond magnet), and the bearing are integrally formed with each other, the through hole is formed in the boundary division and the boundary having low mechanical strength. That is, the mechanical strength of a certain portion around the through hole is exceptionally lower than a portion other than the certain portion around the through hole. Especially, when the bearing is integrally formed, the permanent magnet has a heat linear coefficient of expansion which is different from a heat linear coefficient of expansion of the impeller and the bearing. Therefore, there is a high possibility of causing the cracking in the certain portion around the through hole.

This invention is produced to solve the above problem. An object of this invention is to produce a pump having a rotor which has a high mechanical strength and which is provided with a through hole. Consequently, it is possible to produce the pump having the rotor without cracking and chipping.

### MEANS OF SOLVING THE PROBLEM

According to the present invention, the problem is solved by a pump according to claim 1, claims 2 to 14 relate to a specifically advantageous realization of a pump according to claim 1. A pump in this invention comprises a stator **4** and a rotor **2.** The stator **4** comprises a coil **32**. The coil **32** is configured to develop the magnetic field when the electrical current is supplied to the coil **32**. The rotor **2** has an axial direction, a circumferential direction, and a radial direction. The circumferential direction is defined by a direction about the axial direction. The radial direction is defined by a direction perpendicular to the axial direction. The rotor **2** has an impeller **8** and a permanent magnet **7.** Consequently, the rotor **2** is rotated about the axial direction by the magnetic field. The rotor **2** has a through hole **11** which extends in the axial direction. The permanent magnet is made of a bond magnet. Consequently, the permanent magnet **7** is formed to have a weld line extending from an inside of the radial direction to an outside of the radial direction. The permanent magnet **7** further has a plurality of the magnetic poles which are arranged in the circumferential direction. A certain magnetic pole and the magnetic pole which is next to the certain magnetic pole forms the boundary **15** therebetween. The through hole **11** is displaced from the weld line **13** in the circumferential direction of the rotor **2.** The through hole **11** is displaced from the boundary **15** in the circumferential direction of the rotor **2.**

In this case, the rotor **2** comprises the permanent magnet **7** which is made of the bond magnet. Therefore, the rotor **2** is formed to have a weld line **13.** The weld line **13** has a mechanical strength which is lower than a portion other than the weld line **13** of the rotor **2.** In addition, the boundary **15** between the certain magnetic pole and the magnetic pole next to the certain magnetic pole has a low mechanical strength. However, the through hole **11** is displaced from the weld line **13** in the circumferential direction of the rotor **2.** In addition, the through hole **11** is displaced from the boundary **15** in the circumferential direction of the rotor **2.** Therefore, the through hole **11** is formed in a portion having a high mechanical strength in the rotor. Consequently, even if a portion around the through hole **11** receives the pressure when the liquid around the through hole **11** is varied, it is possible to prevent the chipping and the cracking of the rotor **2.** In addition, when the rotor **2** is rotated, the centrifugal force is caused. However, even if the through hole **11** receives the centrifugal force, it is possible to prevent the chipping and cracking of the rotor **2.** Consequently, it is possible to prevent the pump from being stopped due to the chipping and the cracking of the rotor **2.**

It is preferred that through hole **11** is located in a certain portion of the center side of the rotor such that the center of the rotor is closer to the through hole **11** than the permanent magnet **7.**

It is preferred that the permanent magnet **7** is shaped to have a cylindrical shape. Consequently, the permanent magnet is formed with an axial hole **14** which extends in the axial direction.

It is preferred that the permanent magnet **7** has an extending plate **18** which extends over an entire circumferential direction of the inside circumferential surface of the permanent magnet **7.** The extending plate **18** extends from the inside circumferential surface of the permanent magnet **7** to the center of the axial hole **14.** The extending plate **18** is provided with the through hole **11** extending in the axial direction.

The rotor **2** preferably comprises a bearing **9**. The bearing **9** is attached to the tip of the extending plate **18.** Consequently, the bearing **9** is located in an inside of the axial hole **14.** The through hole **11** is located between the inside circumferential surface and the bearing **9**.

The rotor **2** preferably comprises a plurality of the through holes **11.** Each the through hole **11** is spaced from adjacent through hole **11** in the circumferential direction to leave regular intervals between the through holes **11** adjacent to each other.

The rotor **2** is provided with a positioning portion which is provided for determining "the position in the radial direction" of the rotor **2** with respect to the re-magnetizing unit. The positioning portion **16** is displaced from the weld line **13** in the circumferential direction. In addition, the positioning portion **16** is displaced from the circumferential direction of the boundary **15.**

The impeller **8** is integrally formed with the permanent magnet **7.**

The impeller **8** comprises the rotating plate **22** and a plurality of the blades **24.** A plurality of the blades **24** are disposed on the rotating plate **22.** The blades **24** are located in a position opposite of the rotating plate **22** from the permanent magnet. A plurality of the blades **24** extends from the inside of the radial direction to the outside of the radial direction. A plurality of the blades **24** are inclined at predetermined angles with respect to the radial direction.

It is preferred that each the blade **24** are overlapped with the permanent magnet 7 in the axial direction.

Preferably, at least one of a plurality of the blades **24** is inclined at a predetermined angle with respect to the radial direction. Consequently, at least the one of a plurality of the blades **24** is overlapped with "the magnetic poles arranged in the circumferential direction" in the axial direction.

It is preferred that at least one of a plurality of the blades **24** crosses with the weld line **13.**

It is preferred that the magnetic force of the impeller **8** is smaller than the magnetic force of the permanent magnet **7.**

It is preferred that the pump further comprises the casing **30.** The casing **30** comprises the inlet **36,** the outlet **38,** and the pump cavity **34.** The rotor **2** is disposed within the pump cavity **34**. The impeller **8** is cooperative with an inside surface of the pump cavity **34** to form the fluid flow path. The permanent magnet **7** is cooperative with the inside surface of the pump cavity **34** to form the gap. The gap is separated from the fluid flow path from the rotor **2.** The gap is formed to communicate the through hole **11** with a portion of outer circumference of the pump cavity **34.**

### BRIEF EXPLANATION OF THE DRAWINGS

Fig. 1A shows a top view of the rotor of the embodiment of this invention.
Fig. 1B shows a side cross sectional view of the rotor of the embodiment of this invention.
Fig. 1C shows a bottom view of this embodiment of this invention.
Fig. 2 shows a bottom view of the rotor of the modification of this invention.
Fig. 3A shows a side cross sectional view of another modification of this invention.
Fig. 3B shows a bottom view of another modification of this invention.
Fig. 4 shows a side cross sectional view of the pump of this invention/

### BEST MODE FOR CARRYING OUT THE INVENTION

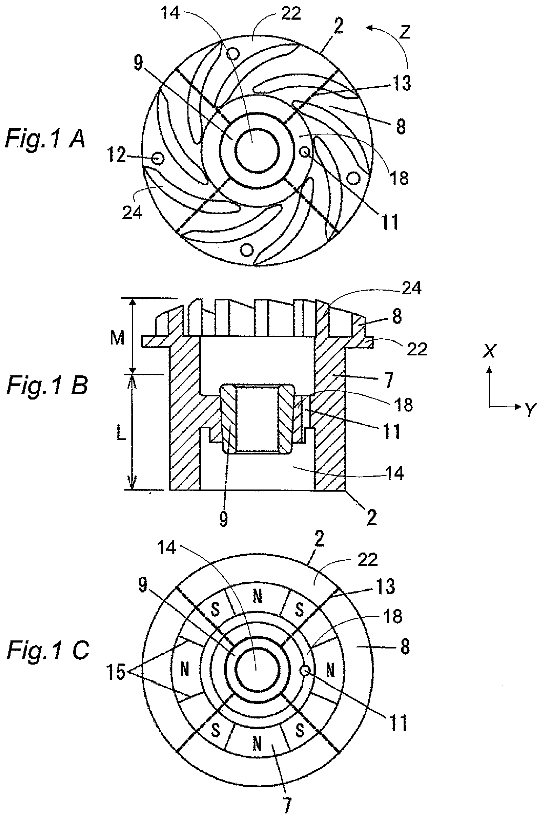

Hereinafter the explanation of this invention is made with attached drawings. Fig. 1 shows a rotor **2** of one example in this embodiment of this invention. In Fig. 1B, X-direction indicates the upper direction of the rotor **2.** In other words, X-direction indicates an axial direction of the rotor **2.** Y-direction indicates the radial direction of the rotor **2.** Z-direction indicates the circumferential direction of the rotor **2.**

The rotor **2** shown in the drawing comprises a permanent magnet **7,** an impeller **8,** and a bearing **9.** The permanent magnet **7** and the impeller **8** are both made of a mixture of the magnet powder with resin. In other words, the permanent magnet **7** and the impeller **8** are made of bond magnet. The bond magnet is realized by a magnet which is made of mixture of the magnet powder and the resin. The permanent magnet **7** and the impeller **8** are formed by means of molding the mixture within a mold for providing a magnetic field orientation. A region L which is shown in Fig. 1B is realized by the permanent magnet **7** which is magnetized to have a condition shown in Fig. 1C. The permanent magnet **7** is magnetized by the magnet for magnetizing. In addition, the permanent magnet **7** is realized by a bond magnet having anisotropy. Specifically, the permanent magnet **7** has a plurality of magnetic pole which are arranged in a circumferential direction of the rotor **2.** As shown in Fig. 1C, the permanent magnet **7** has eight magnetic poles which are arranged in a circumferential direction of the rotor **2.** In addition, as shown in Fig. 1A to Fig. 1C, the permanent magnet **7** is formed to have a cylindrical shape. Consequently, the permanent magnet has an axial hole extending in the axial direction of the rotor. In addition, the permanent magnet **7** is formed to have the cylindrical shape, whereby the permanent magnet **7** has an inside circumferential surface. In addition, the rotor **2** has an extending plate **18**. The extending plate **18** extends toward the center of the axial hole **14** from an entire inside circumferential surface of said permanent magnet **7.** The extending plate **18** has a through hole **11** extending in the axial direction of the rotor. Therefore, the through hole **11** is located close to the center of the rotor **2** such that the through hole **11** is located inwardly from the permanent magnet **7.** In addition, the extending plate **18** holds the bearing **9** at the tip of the extending plate **18.** In other words, the bearing **9** is inserted into an inside of the permanent magnet **7.** Consequently, the through hole **11** is located between the bearing **9** and the inside circumferential surface of the permanent magnet. The permanent magnet **7** has a first end in the axial direction of the rotor **2,** and is provided at its first end with the impeller **8.** That is to say, the rotor **2** is integrally formed with "the bearing in an inside of an inside circumference of the rotor **2"** and "the impeller **8** disposed in one end of the axial direction of the rotor **2".** In addition, the permanent magnet **7** is integrally formed with the impeller **8.** Therefore, the impeller and the permanent magnet **7** are continuously formed to have no seam. Consequently, the impeller **8** is integrally formed with the permanent magnet **7,** whereby the impeller **8** and the permanent magnet **7** are formed as one-piece.

As shown in Fig. 1A to Fig. 1C, the impeller **8** has a rotating plate **22** and a plurality of blades **24.** As will be understood from Fig. 1B, the rotating plate **22** is disposed on the first end of the axial direction of the permanent magnet **7.** A plurality of the blades **24** is disposed on the top surface of the rotating plate **22.** Therefore, a plurality of the blades **24** are located in a position opposite of the rotating plate **22** from the permanent magnet **7.** In addition, the rotating plate **22** is overlapped with the permanent magnet **7** in the axial direction of the rotor **2.** Therefore, the rotating plate **22** is overlapped with all the magnetic poles in the axial direction of the rotor **2.** In addition to this, all the blades are overlapped with the permanent magnet **7** in the axial direction of the rotor **2.** Therefore, some of the blades are overlapped with two or more magnetic poles in the axial direction of the rotor **2.** The blades **24** are cooperative with the next blades to form a flow path between the blade **24** and the next blade **24.**

The mixture of the magnetic powder with the resin is injected into the molding for magnetic field orientation as follows. Firstly, the molding for magnetic field orientation is prepared. The molding for magnetic field orientation is formed at its inside with a cavity. In addition, the molding for magnetic field orientation is provided with a plurality of gates. The gates are provided for injecting the mixture to the cavity. Then, the mixture is injected through the gates. Consequently, the mixture is supplied to the cavity along with the process that the magnetic powder is made to have anisotropy. Hereinafter, the explanation of this embodiment is made with the molding for magnetic field orientation having a first gate, a second gate, a third gate, and a fourth gate. The mixture is injected into the cavity from each the first gate, the second gate, the third gate, and the fourth gate, at the same time. When the mixture is injected from each the gate, the mixture injected from each the gate comes into contact with "the mixture injected from the next gate" in the cavity. (For example, the mixture injected from the first gate comes into contact with "the mixture injected from the gate next to the first gate" in the cavity.) In other words, "the flow front of the mixture which is injected from each the gate" comes into contact with "the flow front of the mixture which is injected from the next gate". When the mixtures come into contact with each other in an inside of the cavity, a weld line **13** is formed at a contact portion of the flow fronts. This first boundary portion is also known as the "weld portion" or "meld line". Then, the magnetic powder in the mixture is made to have anisotropy and connected. As a result, the impeller and the bearing **9** are integrated with each other. Then, the mixture in the cavity is cooled. Consequently, the rotor **2** shown in Fig. 1A to Fig. 1C is formed. The mixture and another mixture which are in contact with the mixture are cooled and solidified. Therefore, the weld line **13** of the rotor **2** is decreased its strength.

Fig. 1A to Fig. 1C shows the rotor **2** which is manufactured in the above. In addition, the reference numeral **12** indicates "each portion of the rotor **2"** corresponding to "each the gate of the cavity". The broken line in Fig. 1A indicates the weld line **13**. The weld line **13** extends from an inside of the radial direction to an outside of the radial direction. Furthermore, as will be understood from Fig. 1B, the magnetic powder is oriented by the magnetic field such that the magnetic powder has a polar anisotropy. Specifically, as will be understood from Fig. 1B, the magnetic powder is oriented by the magnetic field such that the region **L** of the rotor **2** has a polar anisotropy. That is to say, the region **L** of the rotor **2** is prepared as the permanent magnet **7.** Therefore, the permanent magnet has a magnetic force. Specifically, the region **L** in Fig. 1B is realized by the permanent magnet which is made of bond magnet having anisotropy. When the mixture in the molding for magnetic field orientation is magnetized by the magnet for magnetic field orientation, the permanent magnet **7 is** prepared. As will be understood from Fig. 1C, the magnetic poles are arranged in the circumferential direction of the rotor **2,** whereby each the magnetic pole is in contact with the next magnetic pole to create the boundary **15.** That is, the boundary **15** defines the changing portion of the changing of the polarity. The boundary **15** also extends from the inside of the radial direction of the rotor **2** to the outside of the radial direction of the rotor **2.** The number of the boundary **15** is equal to the number of the magnetic pole of the permanent magnet **7**. The boundary **15** has a mechanical strength which is lower than the mechanical strength of a center of the magnetic pole. This is caused by the magnetic field orientation of the magnet powder.

In contrast, the region **M** of the rotor **2** is not magnetized. Or, when the region L of the rotor **2** is magnetized, the region **M** of the rotor **2** adjacent to the region L is slightly magnetized. As a result, the impeller **8** slightly has a magnetic force. When the region **M** of the rotor **2** is not magnetized, the impeller **8** has no magnetic force. Therefore, the impeller **8** has the magnetic force which is smaller than the magnetic force of the permanent magnet **7.** In addition, when the region **M** of the rotor **2** is slightly magnetized, the impeller **8** has a magnetic force, slightly. However, the magnetic force of the impeller **8** is smaller than the magnetic force of the permanent magnet **7**.

In addition, as shown in Fig. 1C, the rotor **2** in this embodiment has a through hole **11** which is located in a position displaced from a position of the boundary **15** having low mechanical strength. Consequently, the problem that the rotor **2** has a portion which has a low mechanical strength is prevented. Specifically, the rotor **2** in this embodiment has the through hole which is provided to the extending plate **18.** The through hole **11** is displaced from the weld line **13** in the circumferential direction of the rotor **2.** Similarly, the through hole **11** is displaced from the boundary **15** in the circumferential direction of the rotor **2.** Therefore, the through hole **11** is not located in a position having low mechanical strength. That is, because the stress is concentrated to a portion around the through hole **11,** the through hole **11** is formed in a portion where the weld line **13** is not formed and also where the boundary **15** is not formed. In other words, the extending plate **18** has a certain portion having a sufficient mechanical strength. The through hole **11** is provided to the certain portion having a sufficient mechanical strength. In addition, because the through hole is provided to the extending plate **18,** the through hole is located in an inside of the permanent magnet **7.**

That is, the through hole **11** is formed in the certain portion other than a portion having low mechanical strength. Therefore, even if the strong stress is applied to the through hole **11,** it is possible to prevent the chipping and the cracking in the through hole **11**. In addition, it is preferred that the through hole **11** having a cross section is shaped to have a circular shape because it is possible to prevent the concentration of the stress of the through hole **11.**

In addition, in the rotor **2** of Fig. 1A to Fig. 1C, the rotor **2** is formed by the injection from the four gates. Therefore, the rotor **2** has four weld lines **13**. However, the number of the weld line **13** is not limited to four. In addition, the permanent magnet **4** of the rotor **2** has eight magnetic poles. However, the number of the magnetic poles of the permanent magnet **7** is not limited to eight. Furthermore, it is preferred that the number of the weld line **13** is different from the number of the magnetic pole. In this case, it is possible to easily displace the through hole **11** from "the weld line **13** and also the boundary **15"** in the circumferential direction of the rotor **2.** In contrast, when the number of the weld line **13** is equal to the number of the magnetic pole, it is difficult to displace the through hole from a portion having low mechanical strength, in the circumferential direction of the rotor.

As mentioned above, this invention discloses the pump with the rotor **2** which has an axial direction, a circumferential direction, and a radial direction. The circumferential direction is defined by a direction about the axial direction. The radial direction is defined by a direction perpendicular to the axial direction. The rotor **2** has an impeller **8** and a permanent magnet **7.** Consequently, the rotor **2** is rotated about the axial direction according to the magnetic field. The rotor **2** has a through hole **11** extending in the axial direction. The permanent magnet **7** is made of bond magnet. Consequently, the permanent magnet **7** is formed with a weld line which extends from an inside of the radial direction to an outside of the radial direction. The permanent magnet **7** further has a plurality of the magnetic poles which are arranged in the circumferential direction of the rotor. The magnetic pole and the next magnet pole are arranged to form the boundary **15** therebetween. The through hole **11** is displaced from the weld line **13** in the circumferential direction of the rotor **2.** In addition, the through hole **11** is displaced from the boundary **15** in the circumferential direction of the rotor **2.** Consequently, the liquid which flows through the through hole reduce the heat stress in the rotor **2** when the temperature of the liquid is varied. Therefore, it is possible to prevent the breakage of the rotor **2.** In addition, it is possible to prevent the portion around the through hole **11** of the rotor **2** from being broken due to the centrifugal force caused by the rotation of the rotor.

In addition, the permanent magnet **7** is formed by the injection molding. Consequently, the permanent magnet **7** is formed with a weld line **13** which extends in the radial direction of the rotor **2.**

In addition, the impeller **8** is integrally formed with the permanent magnet. Consequently, the boundary formed by the magnetic poles is reinforced by the impeller **8.**

In addition, the impeller **8** comprises a rotating plate **22** and a plurality of the blades **24.** A plurality of the blades **24** is disposed on the rotating plate **22**. A plurality of the blades **24** is opposite of the rotating plate **22** from the permanent magnet **7.** A plurality of the blades **24** extend from an inside of the radial direction to an outside of the radial direction. A plurality of the blades **24** are inclined at a predetermined angle with respect to the radial direction of the rotor.

In addition, each the blade **24** is overlapped with the permanent magnet **7** in the axial direction of the rotor **2.** Consequently, the boundary **15** is reinforced by "the rotating plate **22** and the blades **24** of the impeller **8".**

In addition, at least one of the blades **24** is inclined at the predetermined angle with respect to the radial direction of the rotor. Consequently, at least one of the blades is overlapped with a plurality of the magnetic poles arranged in the circumferential direction of the rotor, and are overlapped with a plurality of the magnetic poles in the axial direction of the rotor **2.** Consequently, the boundary **15** is reinforced by the blade **24.**

In addition, at least one of a plurality of the blades **24** is inclined at the predetermined angle with respect to the radial direction of the rotor **2** such that at least one of a plurality of the blades **24** crosses with the boundary **15.** Consequently, the boundary **15** is reinforced by the blades **24**.

In addition, at least one of a plurality of the blades **24** is inclined at a predetermined angle with respect to the radial direction of the rotor such that at least one of a plurality of the blades **24** crosses with the weld line **13.** Consequently, the weld line **13 is** strengthened by the blades **24.**

In addition, the permanent magnet **7** is integrally formed with the impeller **8**. Consequently, the permanent magnet **7** is integrally formed with the impeller. That is, the permanent magnet **7** and the impeller **7** are integrally formed as a single piece. Consequently, the impeller **8** reinforces the mechanical strength of the permanent magnet **7.**

In addition, all the blades **24** are inclined at predetermined angles with respect to the radial directions of the rotor **2.** Consequently, all the weld lines cross with at least one of a plurality of the blades. Consequently, the weld line **13** is reinforced by the blade **24.**

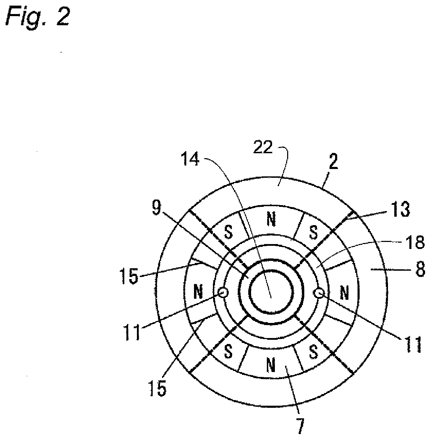

Fig. 2 shows another embodiment. The rotor **2** in this modification has a plurality of the through holes **11**. Specifically, the rotor **2** in this embodiment comprises two through holes **11.** The through holes **11** are arranged in a circumferential direction of the rotor **2** such that the through holes **11** arranged to leave regular intervals therebetween. In addition, each the through hole **11** is displaced from the weld line **13** in the circumferential direction of the rotor **2.** Each the through hole **11** is displaced from the boundary **15** in the circumferential direction of the rotor **2.** The through hole **11** is only required to have a predetermined cross section area. Therefore, the number of the through hole **11** is not limited thereto. In this modification, the through hole **11** is spaced from the next through hole **11** in the circumferential direction of the rotor **2** whereby the through holes **11** are arranged at regular intervals. In other words, the distances between a certain through hole **11** and a through hole **11** next to the certain through hole **11** are equal to each other. Therefore, it is possible to keep the weight of the rotor and the balance of the pressure in symmetrical with respect to an axis of the rotor **2.** Consequently, it is possible to prevent the noise and the vibration of the rotor **2** according to the rotation of the rotor **2.** In addition, it is possible to keep the uniformity of the load applied to the bearing **9** from the axial portion of the rotor **2** in the radial direction of the rotor **2.** Therefore, it is possible to reduce the wearing of the bearing **9.** This results in the increase of the pump life. In addition, it is possible to employ the through holes having the number of three or more.

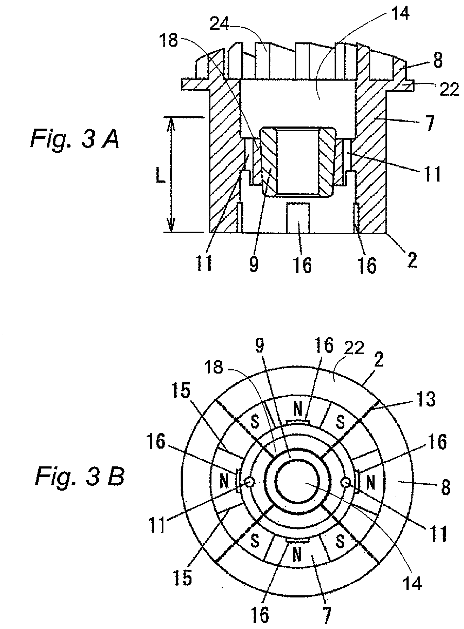

Fig. 3 shows yet another embodiment. This modification is made to assume a case where the rotor **2** is made re-magnetization in order to keep a predetermined magnetic force of the rotor **2** after forming the rotor **2.** In order to make a re-magnetization in a direction of magnetic field orientation, the rotor **2** is provided at its inside circumferential surface with a positioning portion **16** when the rotor **2** is molded.

Corresponding to the above, a re-magnetizing unit having a yoke for re-magnetization is provided with a positioning member which is engaged with the positioning portion **16.** Consequently, the magnetic pole which is provided by the magnetic field orientation is made re-magnetization, whereby re-magnetization of providing the same magnetic pole is made. It is noted that, when the positioning portion **16** is defined by the groove in an inside surface of the rotor **2** shown in the figure, the positioning portion **16** causes the decrease of the mechanical strength of a portion of the positioning portion **16** of the rotor **2.** Therefore, the positioning portion **16** is, similar to the through hole **11**, displaced from the weld line **13** in the circumferential direction of the rotor **2.** In addition, the positioning portion **16** is displaced from the boundary **15** in the circumferential direction of the rotor **2.**

The figure discloses the positioning portions **16** which are defined by the rectangular grooves being provided to four portions. The positioning portion **16** is located between the weld line **13** and the weld line **13.** Therefore, the positioning portion **16** is displaced from the weld line **13** in the circumferential direction of the rotor **2.** In addition, the positioning portion **16** is displaced from the boundary **15** in the circumferential direction of the rotor **2.** It is noted that the position of the positioning portion **16** is only required to be displaced from the weld line **13** and also the boundary **15** in the circumferential direction. Therefore, the positioning portion **16** is not limited its cross section and the number thereto.

As explained above, the rotor **2** has a positioning portion **16** which is provided for determining the position of the rotor **2** in the radial direction with respect to the re-magnetizing unit. The positioning portion **16** is displaced from the weld line **13** in the circumferential direction of the rotor **2.** The positioning portion **16** is displaced from the boundary **15** in the circumferential direction. Consequently, the permanent magnet **7** is made magnetization, stably. In addition, this configuration makes it possible to prevent the decrease of the mechanical strength of the rotor **2** due to the positioning portion **16.**

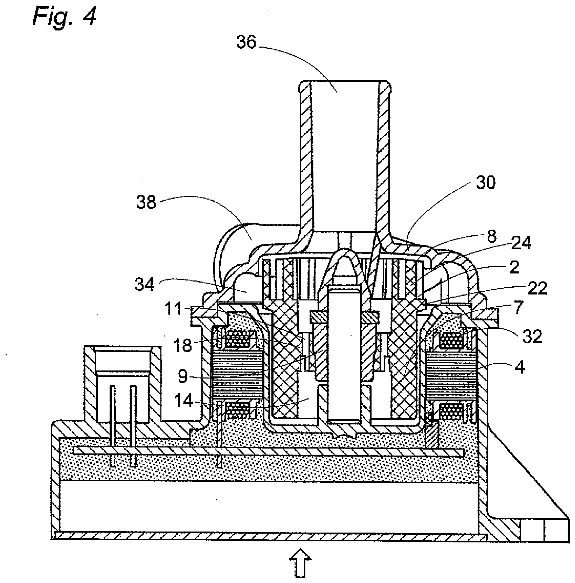

Fig. 4 shows the pump which comprises the rotor **2** explained in the above embodiment and the modification. The pump comprises the casing **30** and the circuit board. The casing **30** is provided at its inside with the pump chamber **34.** The casing **30** is provided with the inlet **36** and the outlet **38.** The pump chamber **34** is formed to communicate the inlet **36** with the outlet **38.** The rotor **2** is disposed within the pump chamber **34.** Consequently the pump chamber **34** has a certain portion in its inside surface which is faced to the impeller **8.** The impeller **8** is cooperative with the certain portion in the inside surface of the pump to form the fluid flow path. The fluid flow path communicates the inlet **36** with the outlet **38**. In contrast, the pump chamber **34** has a predetermined portion in its inside surface which is faced to the permanent magnet **7**. The permanent magnet **7** is cooperative with the predetermined portion in the inside surface of the pump chamber **34** to form the gap. The gap is spaced from the rotor **2** by the fluid flow path. The gap communicates the outer circumferential portion of the fluid flow path with the through hole **11.** Furthermore, the casing **30** has an enclosing portion. Specifically, the casing **30** is formed to have a recess which has an opening directed to the lower direction, and the lid which covers the recess. The inside surface of the recess is cooperative with the lid to form the enclosing portion. The enclosing portion incorporates the circuit board and the stator **4**. The stator **4** comprises the coil **32.** The circuit board comprises the control circuit which is configured to control the electrical current supplied to the coil **32** of the stator **4.**

In this pump, when the circuit board receives the electrical power through the power terminal, the circuit board supplies the electrical current to the stator **4.** When the electrical current is supplied to the stator **4,** the coil **32** of the stator **4** generates the magnetic field. The magnetic field causes the rotation of the permanent magnet **7.** The permanent magnet **7** is integrally formed with the impeller **8**. That is, the permanent magnet **7** and the impeller **8** are formed as single piece. Therefore, according to the rotation of the permanent magnet **7,** the impeller **8** is rotated. In this manner, according to the magnetic field, the rotor **2** is rotated about the axial direction of the rotor **2.** When the impeller **8** is rotated, the blade **24** sends the water in the inside of the fluid flow path from the inside of the radial direction to the outside of the radial direction. In this manner, the water in the fluid flow path is sent to the outside of the pump from the outlet **38.** In addition, when the water in the fluid flow path is sent to the outside of the pump, the pressure in the pump chamber **34** is decreased. When the pump chamber **34** is decreased its pressure, the water flows to the pump chamber **34** from the inlet **36.** In this manner, the pump transfers the water.

In addition, when the water is sent to the outer circumference of the fluid flow path, the water is sent to the outside of the outlet **38** and is also sent to the gap. The water sent to the gap flows to the fluid flow path through the through hole **11** located in a center side of the rotor **2** such that the center of the rotor **2** is closer to the through hole **11** than the permanent magnet **7.** In this manner, it is possible to prevent the staying of the water in the gap. Therefore, it is possible to prevent the staying of the foreign substance in the gap. Furthermore, the water in the gap is circulated. Therefore, it is possible to prevent the portion between the casing **30** and the lower surface of the rotor **2** from being heated.

As explained in the above, the through hole **11** is located in a portion of center side of the rotor **2.** The center of the rotor **2** is closer to the through hole **11** than the permanent magnet **7.** Consequently, it is possible to efficiently circulate the water which stays in the gap within the pump chamber **34.**

Further, the permanent magnet **7** is shaped to have a cylindrical shape. Consequently, the permanent magnet **7** is formed to have an axial hole **14** extending in the axial direction. The permanent magnet **7** has an extending plate **18** which extends from an entire inside circumferential surface of the permanent magnet **7** to the center of the axial hole **14**. The through hole **11** is provided to the extending plate **18** such that the through hole **11** extends in the axial direction. Therefore, it is possible to efficiently send the water in the gap to the center of the pump chamber **34.** Therefore, it is possible to efficiently circulate the water staying in the gap to the pump chamber **34.**

Furthermore, the rotor **2** has the bearing **9.** The bearing **9** is disposed at the tip of the extending plate **18**. Consequently, the bearing **9** is located in an inside of the axial hole **14.** The through hole **11** is located between the inside circumferential surface and the bearing **9.** Consequently, the water staying in the gap is efficiently circulated within the pump chamber **34.**

## Claims

1. A pump comprising:
a stator (4) comprising a coil (32), said coil (32) being configured to generate a magnetic field when an electrical current is supplied to said coil (32);
a rotor (2) having an axial direction, a circumferential direction, and a radial direction,
a casing (30),
said casing (30) comprising an inlet (36), an outlet (38), and a pump cavity (34) by which said inlet (36) and said outlet (38) communicate,
said rotor (2) being disposed in said pump cavity (34),
said rotor (2) comprising an impeller (8) and a permanent magnet (7), whereby said rotor (2) is rotated about said axial direction by the magnetic field, **characterized in that** said rotor (2) has a through hole (11) extending in the axial direction,
said through hole (11) enabling a foreign substance and air between said rotor (2) and said pump cavity (34) to be discharged,
said permanent magnet (7) is made of a bond magnet, whereby said permanent magnet (7) has a weld line (13) extending from an inside to an outside of said radial direction,
said permanent magnet (7) has a plurality of magnetic poles which are arranged in the circumferential direction, whereby boundaries (15) are formed between the magnetic poles adjacent to each other,
said through hole (11) is displaced from said weld line (13) in the circumferential direction, and
said through hole (11) is displaced from said boundary (15) in the circumferential direction.

2. The pump as set forth in claim 1, wherein
said through hole (11) is located in a position of a center side of said rotor (2) such that a center of said rotor (2) is closer to said through hole (11) than said permanent magnet (7).

3. The pump as set forth claim 1 or claim 2, wherein
said permanent magnet (7) has a cylindrical shape to have an axial hole (14) which extends in the axial direction.

4. The pump as set forth in claim 3, wherein
said permanent magnet (7) is provided with an extending plate (18) which extends toward a center of said axial hole (14) from an inside circumferential surface of said permanent magnet (7), said extending plate (18) extends in an entire of said inside circumferential surface of said permanent magnet (7),
said extending plate (18) being provided with said through hole (11) extending in the axial direction.

5. The pump as set forth in claim 4, wherein
said rotor (2) has a bearing (9),
said bearing (9) is provided to a tip of said extending plate (18) to be located in an inside of said axial hole (14),
said through hole (11) is located between said inside circumferential surface and said bearing (9).

6. The pump as set forth in any one of claims 1 to 5, wherein
said rotor (2) has a plurality of said through holes (11),
said through holes (11) are arranged to be spaced from adjacent through holes (11) to have regular intervals.

7. The pump as set forth in any one of claims 1 to 6, wherein
the rotor (2) has a positioning portion (16) for determining a position of rotor (2) with respect to a re-magnetizing unit,
said positioning portion (16) is displaced from said weld line (13) in the circumferential direction,
said positioning portion (16) is displaced from said boundary (15) in the circumferential direction.

8. The pump as set forth in any one of claims 1 to 7, wherein
said impeller (8) is integrally formed with said permanent magnet (7).

9. The pump as set forth in any one of claims 1 to 8, wherein
said impeller (8) has a rotating plate (22) and a plurality of blades (24),
a plurality of said blades (24) are disposed on said rotating plate (22), a plurality of said blades (24) are located in a position opposite of said rotating plate (22) from said permanent magnet (7),
a plurality of said blades (24) extending from an inside of said radial direction toward an outside of said radial direction, a plurality of said blades (24) being inclined at a predetermined angle with respect to said radial direction.

10. The pump as set forth in claim 9, wherein
each said blade (24) is overlapped with respect to said permanent magnet (7) in the axial direction.

11. The pump as set forth in claim 10, wherein
at least one of said blades (24) is inclined at the predetermined angle with respect to said radial direction such that at least the one of a plurality of said blades (24) is overlapped with a plurality of said magnetic poles arranged in the circumferential direction, whereby at least one of a plurality of said blades (24) is overlapped with a plurality of said magnetic poles in the axial direction.

12. The pump as set forth in claim 10 or claim 11, wherein
each said weld line (13) is crossed with at least one of a plurality of said blades (24).

13. The pump as set forth in any one of claims 1 to 12, wherein
said impeller (8) has a magnetic force which is smaller than a magnetic force of said permanent magnet (7).

14. The pump as set forth in any one of claims 1 to 13, wherein
said impeller (8) is cooperative with an inside surface of said pump cavity (34) to create a fluid flow path,
said permanent magnet (7) is cooperative with said inside surface of said pump cavity (34) to create a gap, said gap being separated from said fluid flow path by said rotor (2), and said gap being shaped to communicate an outer circumference region of said pump cavity (34) and said through hole (11).

## Patentansprüche

1. Pumpe, aufweisend:
einen Stator (4), der eine Spule (32) aufweist, wobei die Spule (32) konfiguriert ist, um ein Magnetfeld zu erzeugen, wenn der Spule (32) ein elektrischer Strom zugeführt wird;
einen Rotor (2) mit einer axialen Richtung, einer Umfangsrichtung und einer radialen Richtung,
ein Gehäuse (30),
wobei das Gehäuse (30) einen Einlass (36), einen Auslass (38) und einen Pumpenhohlraum (34) aufweist, durch den der Einlass (36) und der Auslass (38) in Verbindung stehen,
wobei der Rotor (2) in dem Pumpenhohlraum (34) angeordnet ist,
wobei der Rotor (2) ein Schaufelrad (8) und einen Permanentmagneten (7) aufweist, wobei der Rotor (2) durch das Magnetfeld um die axiale Richtung gedreht wird,
**dadurch gekennzeichnet, dass**
der Rotor (2) ein Durchgangsloch (11) hat, das sich in der axialen Richtung erstreckt,
das Durchgangsloch (11) es ermöglicht, eine Fremdsubstanz und Luft zwischen dem Rotor (2) und dem Pumpenhohlraum (34) abzuführen,
der Permanentmagnet (7) aus einem Verbundmagneten hergestellt ist, wobei der Permanentmagnet (7) eine Schweißnaht (13) hat, die sich von einer Innenseite zu einer Außenseite der radialen Richtung erstreckt,
der Permanentmagnet (7) mehrere Magnetpole hat, die in der Umfangsrichtung angeordnet sind, wobei zwischen den angrenzenden Magnetpolen Grenzen (15) gebildet sind,
das Durchgangsloch (11) von der Schweißnaht (13) in der Umfangsrichtung versetzt ist, und
das Durchgangsloch (11) von der Grenze (15) in der Umfangsrichtung versetzt ist.

2. Pumpe nach Anspruch 1, wobei
das Durchgangsloch (11) sich in einer Position einer Zentrumsseite des Rotors (2) befindet, so dass sich ein Zentrum des Rotors (2) näher an dem Durchgangsloch (11) befindet als der Permanentmagnet (7).

3. Pumpe nach Anspruch 1 oder Anspruch 2, wobei
der Permanentmagnet (7) eine zylindrische Form hat, um ein axiales Loch (14) zu haben, das sich in der axialen Richtung erstreckt.

4. Pumpe nach Anspruch 3, wobei
der Permanentmagnet (7) mit einer Verlängerungsplatte (18) versehen ist, die sich von einer Innenumfangsfläche des Permanentmagneten (7) zu einem Zentrum des axialen Lochs (14) erstreckt, wobei sich die Verlängerungsplatte (18) in einer gesamten Innenumfangsfläche des Permanentmagneten (7) erstreckt,
wobei die Verlängerungsplatte (18) mit dem Durchgangsloch (11) versehen ist, das sich in der axialen Richtung erstreckt.

5. Pumpe nach Anspruch 4, wobei
der Rotor (2) ein Lager (9) hat,
das Lager (9) für eine Spitze der Verlängerungsplatte (18) vorgesehen ist, die in einem Inneren des axialen Lochs (14) anzuordnen ist,
das Durchgangsloch (11) sich zwischen der Innenumfangsfläche und dem Lager (9) befindet.

6. Pumpe nach einem beliebigen der Ansprüche 1 bis 5, wobei
der Rotor (2) mehrere Durchgangslöcher (11) hat,
die Durchgangslöcher (11) angeordnet sind, um von benachbarten Durchgangslöchern (11) mit regelmäßigen Abständen angeordnet zu sein.

7. Pumpe nach einem beliebigen der Ansprüche 1 bis 6, wobei
der Rotor (2) einen Positionierungsabschnitt (16) zum Bestimmen einer Position des Rotors (2) in Bezug auf eine Ummagnetisierungseinheit hat,
der Positionierungsabschnitt (16) in der Umfangsrichtung von der Schweißnaht (13) versetzt ist,
der Positionierungsabschnitt (16) in der Umfangsrichtung von der Grenze (15) versetzt ist.

8. Pumpe nach einem beliebigen der Ansprüche 1 bis 7, wobei das Schaufelrad (8) mit dem Permanentmagneten (7) einstückig ausgebildet ist.

9. Pumpe nach einem beliebigen der Ansprüche 1 bis 8, wobei
das Schaufelrad (8) eine rotierende Platte (22) und mehrere Schaufeln (24) hat,
mehrere der Schaufeln (24) auf der rotierenden Platte (22) angeordnet sind, mehrere der Schaufeln (24) in einer Position angeordnet sind, die von dem Permanentmagneten (7) her der rotierenden Platte (22) gegenüberliegt,
mehrere der Schaufeln (24) sich von einer Innenseite der radialen Richtung in Richtung einer Außenseite der radialen Richtung erstrecken, wobei mehrere der Schaufeln (24) in Bezug auf die radiale Richtung in einem vorbestimmten Winkel geneigt sind.

10. Pumpe nach Anspruch 9, wobei
jede der Schaufeln (24) in Bezug auf den genannten Permanentmagneten (7) in der axialen Richtung überlappt wird.

11. Pumpe nach Anspruch 10, wobei
mindestens eine der Schaufeln (24) in dem vorbestimmten Winkel in Bezug auf die radiale Richtung geneigt ist, so dass mindestens die eine von mehreren der Schaufeln (24) mit mehreren der Magnetpole, die in der Umfangsrichtung angeordnet sind, überlappt wird, so dass dadurch mindestens eine von mehreren der Schaufeln (24) mit mehreren der Magnetpole in der axialen Richtung überlappt wird.

12. Pumpe nach Anspruch 10 oder 11, wobei
jede Schweißnaht (13) mit mindestens einer von mehreren der Schaufeln (24) gekreuzt wird.

13. Pumpe nach einem beliebigen der Ansprüche 1 bis 12, wobei
das Schaufelrad (8) eine magnetische Kraft hat, die kleiner ist als eine magnetische Kraft des Permanentmagneten (7).

14. Pumpe nach einem beliebigen der Ansprüche 1 bis 13, wobei
das Schaufelrad (8) mit einer Innenfläche des Pumpenhohlraums (34) zusammenwirkt, um einen Fluidströmungspfad zu schaffen,
der Permanentmagnet (7) mit der Innenfläche des Pumpenhohlraums (34) zusammenwirkt, um einen Spalt zu schaffen, wobei der Spalt von dem Fluidströmungspfad durch den Rotor (2) getrennt ist, und
wobei der Spalt geformt ist, um einen Außenumfangsbereich des Pumpenhohlraums (34) und das Durchgangsloch (11) miteinander zu verbinden.

## Revendications

1. Pompe comprenant:
un stator (4) comprenant une bobine (32), ladite bobine (32) étant configurée pour générer un champ magnétique lorsqu'un courant électrique est appliqué sur ladite bobine (32) ;
un rotor (2) ayant une direction axiale, une direction circonférentielle et une direction radiale,
un carter (30),
ledit carter (30) comprenant une entrée (36), une sortie (38) et une cavité de pompe (34) grâce à laquelle ladite entrée (36) et ladite sortie (38) communiquent,
ledit rotor (2) étant disposé dans ladite cavité de pompe (34),
ledit rotor (2) comprenant un impulseur (8) et un aimant permanent (7), moyennant quoi ledit rotor (2) tourne autour de ladite direction axiale grâce au champ magnétique,
**caractérisée en ce que** ledit rotor (2) a un trou débouchant (11) s'étendant dans la direction axiale, ledit trou débouchant (11) permettant de décharger un corps étranger et l'air entre ledit rotor (2) et ladite cavité de pompe (34),
ledit aimant permanent (7) est réalisé avec un aimant de liaison, moyennant quoi ledit aimant permanent (7) a une ligne de soudure (13) s'étendant d'un intérieur vers un extérieur de ladite direction radiale,
ledit aimant permanent (7) a une pluralité de pôles magnétiques qui sont agencés dans la direction circonférentielle, moyennant quoi des limites (15) sont formées entre les pôles magnétiques adjacents les uns par rapport aux autres,
ledit trou débouchant (11) est déplacé par rapport à ladite ligne de soudure (13) dans la direction circonférentielle, et
ledit trou débouchant (11) est déplacé par rapport à ladite limite (15) dans la direction circonférentielle.

2. Pompe selon la revendication 1, dans laquelle :
ledit trou débouchant (11) est positionné dans une position d'un côté central dudit rotor (2) de sorte qu'un centre dudit rotor (2) est plus proche dudit trou débouchant (11) que ledit aimant permanent (7).

3. Pompe selon la revendication 1 ou la revendication 2, dans laquelle :
ledit aimant permanent (7) a une forme cylindrique pour avoir un trou axial (14) qui s'étend dans la direction axiale.

4. Pompe selon la revendication 3, dans laquelle :
ledit aimant permanent (7) est prévu avec une plaque d'extension (18) qui s'étend vers un centre dudit trou axial (14) à partir d'une surface circonférentielle interne dudit aimant permanent (7), ladite plaque d'extension (18) s'étend dans toute ladite surface circonférentielle interne dudit aimant permanent (7),
ladite plaque d'extension (18) étant prévue avec ledit trou débouchant (11) s'étendant dans la direction axiale.

5. Pompe selon la revendication 4, dans laquelle :
ledit rotor (2) a un palier (9),
ledit palier (9) est prévu avec une pointe de ladite plaque d'extension (18) à positionner dans un intérieur dudit trou axial (14),
ledit trou débouchant (11) est positionné entre ladite surface circonférentielle interne et ledit palier (9).

6. Pompe selon l'une quelconque des revendications 1 à 5, dans laquelle :
ledit rotor (2) a une pluralité desdits trous débouchants (11),
lesdits trous débouchants (11) sont agencés pour être espacés des trous débouchants (11) adjacents afin d'avoir des intervalles réguliers.

7. Pompe selon l'une quelconque des revendications 1 à 6, dans laquelle :
le rotor (2) a une partie de positionnement (16) pour déterminer une position du rotor (2) par rapport à une unité de remagnétisation,
ladite partie de positionnement (16) est déplacée par rapport à ladite ligne de soudure (13) dans la direction circonférentielle,
ladite partie de positionnement (16) est déplacée par rapport à ladite limite (15) dans la direction circonférentielle.

8. Pompe selon l'une quelconque des revendications 1 à 7, dans laquelle :
ledit impulseur (8) est formé de manière solidaire avec ledit aimant permanent (7).

9. Pompe selon l'une quelconque des revendications 1 à 8, dans laquelle :
ledit impulseur (8) a une plaque rotative (22) une pluralité de pales (24)
une pluralité desdites pales (24) est disposée sur ladite plaque rotative (22), une pluralité desdites pales (24) est positionnée dans une position opposée à ladite plaque rotative (22) par rapport audit aimant permanent (7),
une pluralité desdites pales (24) s'étendant à partir d'un intérieur de ladite direction radiale vers un extérieur de ladite direction radiale, une pluralité desdites pales (24) étant inclinée à un angle prédéterminé par rapport à ladite direction radiale.

10. Pompe selon la revendication 9, dans laquelle :
chacune desdites pales (24) est recouverte par rapport audit aimant permanent (7) dans la direction axiale.

11. Pompe selon la revendication 10, dans laquelle :
au moins l'une desdites pales (24) est inclinée à l'angle prédéterminé par rapport à ladite direction radiale de sorte qu'au moins l'une d'une pluralité desdites pales (24) est recouverte avec une pluralité desdits pôles magnétiques agencés dans la direction circonférentielle, moyennant quoi au moins l'une d'une pluralité desdites pales (24) est recouverte avec une pluralité desdits pôles magnétiques dans la direction axiale.

12. Pompe selon la revendication 10 ou la revendication 11, dans laquelle :
chacune desdites lignes de soudure (13) est traversée avec au moins l'une d'une pluralité desdites pales (24).

13. Pompe selon l'une quelconque des revendications 1 à 12, dans laquelle :
ledit impulseur (8) a une force magnétique qui est inférieure à une force magnétique dudit aimant permanent (7).

14. Pompe selon l'une quelconque des revendications 1 à 13, dans laquelle :
ledit impulseur (8) est coopératif avec une surface intérieure de ladite cavité de pompe (34) pour créer une trajectoire d'écoulement de fluide,
ledit aimant magnétique (7) est coopératif avec ladite surface intérieure de ladite cavité de pompe (34) afin de créer un espace, ledit espace étant séparé de ladite trajectoire d'écoulement de fluide par ledit rotor (2), et
ledit espacé étant formé pour faire communiquer une région de circonférence externe de ladite cavité de pompe (34) et ledit trou débouchant (11).
